# EUROPÄISCHE PATENTSCHRIFT

(11) **EP 3 448 304 B1**
(45) Veröffentlichungstag und Bekanntmachung des Hinweises auf die Patenterteilung: **22.01.2020**
(21) Anmeldenummer: 17724315.1
(22) Anmeldetag: 24.04.2017
(51) Int. Cl.: A61C 15/00, A46B 5/00

(54) **INTERDENTALREINIGER**
INTERDENTAL CLEANER
DISPOSITIF DE NETTOYAGE DE L'ESPACE INTERDENTAIRE

(30) Priorität: 26.04.2016 DE 102016005012
(43) Veröffentlichungstag der Anmeldung: 06.03.2019
(73) Patentinhaber: Sunstar Suisse S.A., 1163 Etoy (CH)
(72) Erfinder: BUTZ, Jürgen, 79677 Schönau (DE)
(74) Vertreter: Lichti - Patentanwälte Partnerschaft mbB
(86) Internationale Anmeldenummer: PCT/EP2017/000507
(87) Internationale Veröffentlichungsnummer: WO 2017/186344

(56) Entgegenhaltungen:
- WO-A1-2008/025443
- DE-A1-102006 005 616
- JP-A- 2007 037 791
- US-A1- 2016 000 215

## Beschreibung

Die Erfindung betrifft einen Interdentalreiniger mit einem stabförmigen Träger aus Kunststoff, der in seinem einen Endbereich mit einem Reinigungsteil aus weich-elastischem Kunststoff versehen ist, und mit einem Handgriffteil aus Kunststoff, wobei der Träger an seinem dem Handgriffteil zugewandten Ende in einem Verbindungsbereich über einen Steg einstückig mit dem Handgriffteil verbunden ist.

Ein derartiger Interdentalreiniger, der auch als Zahnstocher bezeichnet wird, ist beispielsweise aus der EP 0 932 371 bekannt. Der dort gezeigte Interdentalreiniger besitzt einen stabförmigen Träger aus einem formstabilen Kunststoff, an dessen hinteren Ende über einen Verbindungsbereich ein Handgriffteil einstückig angeformt ist. In seinem vorderen, dem Handgriffteil abgewandten Endbereich ist der Träger mit einem weich-elastischen Überzug versehen, der mit radial hervorstehenden Strukturelementen beispielsweise in Form von angeformten Fingern, Lamellen oder Rippen ausgebildet sein kann und ein Reinigungsteil bildet. Zur Reinigung der Zahnzwischenräume erfasst der Nutzer den Interdentalreiniger an dem Handgriffteil und führt das vordere Ende des Trägers und somit das Reinigungsteil in den Zahnzwischenraum ein und bewegt den Interdentalreiniger hin und her.

Es hat sich gezeigt, dass die Reinigungswirkung wesentlich von der Art und Weise abhängt, wie der Nutzer den Interdentalreiniger innerhalb des Zahnzwischenraumes führt. Dabei ist die Ausrichtung des Interdentalreinigers im wesentlichen dadurch bestimmt, wie der Benutzer das Handgriffteil relativ zu dem zu reinigenden Zahnzwischenraum anordnet. Zwar besitzt der Träger eine gewisse Elastizität und kann elastisch verformt werden, falls eine besondere Schrägstellung des Reinigungsabschnittes innerhalb des Zahnzwischenraums notwendig ist, lässt sich diese jedoch nur erreichen, indem der Benutzer den gesamten Interdentalreiniger entsprechend schräg ausrichtet, was in manchen Fällen schwierig zu erreichen ist.

Ein weiterer Interdentalreiniger ist aus DE 10 2006 005 616 A1 bekannt.

Der Erfindung liegt die Aufgabe zugrunde, einen Interdentalreiniger der genannten Art zu schaffen, der eine variablere Positionierung des Reinigungsteils innerhalb des Zahnzwischenraums ermöglicht.

Diese Aufgabe wird erfindungsgemäß durch einen Interdentalreiniger mit den Merkmalen des Anspruchs 1 gelöst. Dabei ist vorgesehen, dass der Verbindungsbereich als Gelenk ausgebildet ist, dass der Steg zumindest teilweise mit einer Umhüllung aus einem weich elastischen Kunststoff versehen ist und dass der Steg zumindest eine hervorstehende Steg-Rippe aufweist und dass auf der Außenseite der Umhüllung zumindest eine Rippe ausgebildet ist.

Die Rippen und/oder die Stegrippen im Sinne der Erfindung können auf unterschiedliche Weise gebildet werden. Einerseits ist es möglich, auf der Außenseite der Umhüllung und/oder auf der Außenseite des Steges senkrecht zur Längsachse des Interdentalreinigers verlaufende, parallel auf Abstand nebeneinander angeordnete nutartige Vertiefungen einzubringen, so dass zwischen zwei benachbarten Vertiefungen jeweils eine Rippe bzw. eine Stegrippe gebildet ist. Andererseits kann die Wandstärke bzw. Dicke der Umhüllung und/oder des Steges zur Bildung der Rippen bzw. Stegrippen erhöht werden.

Die Erfindung geht von der Grundüberlegung aus, in dem Verbindungsbereich, der den Träger mit dem Handgriffteil verbindet, ein Gelenk auszubilden. Dabei ist das Gelenk einerseits durch die im Verbindungsbereich gegebenen geometrischen Abmessungen des Stegs und/oder durch die Materialwahl bedingt. Insbesondere der weich-elastische Kunststoff, der in dem Verbindungsbereich angeordnet ist, wirkt als Feder und hat wesentlichen Einfluss auf die Verformungseigenschaften des Interdentalreinigers und die dazu notwendigen Kräfte. Durch geeignete Wahl des Materials für den weich-elastischen Kunststoff, für den insbesondere ein thermoplastisches Elastomer oder Silikon verwendet wird, können die Verformungseigenschaften des Interdentalreinigers in gewünschter Weise vorgegeben werden. Auch das Material des stabförmigen Trägers und die Geometrie des stabförmigen Trägers insbesondere im Bereich des Stegs haben einen Einfluss auf die Verformungseigenschaften des Interdentalreinigers.

Bei Benutzung des Interdentalreinigers kann der Benutzer das Handgriffteil relativ zu dem in dem Zahnzwischenraum eingeführten Träger unter elastischer Verformung des Verbindungsbereichs abwinkeln, so dass sich auch schwierig zu erreichende Bereiche des Zahnzwischenraums in einfacher Weise reinigen lassen.

Für die Handhabung des Interdentalreinigers hat es sich als vorteilhaft erwiesen, eine gegenseitige Verstellung zwischen dem Träger und dem Handgriffteil nur um eine Achse vorzusehen, die vorzugsweise senkrecht zur Längsachse des Interdentalreinigers verläuft. Dies kann durch ein Gelenk nach Art eines Scharniergelenks erreicht werden.

Zur Aufbringung größerer Kräfte durch den Benutzer und zur Vermeidung einer übermäßigen Verformung des Verbindungsbereiches ist vorgesehen, dass der Träger und das Handgriffteil über den Steg einstückig miteinander verbunden sind. Dabei werden der Träger, der Steg und das Handgriffteil in einem ersten Verfahrensschritt aus einem stabilen Kunststoff vorzugsweise als monolithisches Bauteil gespritzt und in einem zweiten Verfahrensschritt zumindest in dem Verbindungsbereich zur Bildung der Umhüllung mit dem weich-elastischen Kunststoff versehen. Dabei kann vorgesehen sein, dass der Steg zumindest teilweise und insbesondere vollständig von dem weich-elastischen Kunststoff umgeben, d.h. in den weich-elastischen Kunststoff eingekapselt ist.

Aufgrund des Vorhandenseins des Steges besitzt der Verbindungsbereich einen im Querschnitt vorzugsweise dreischichtigen Aufbau, indem der in der Mitte angeordnete Steg auf seiner Oberseite und seiner Unterseite von weich elastischem Kunststoff überzogen ist, so dass eine vorzugsweise vollständige Umhüllung gegeben ist.

Das Gelenk des Verbindungsbereichs wird durch die elastische Verformung des Verbindungsbereichs bzw. des Steges und der Umhüllung und nicht durch die relative Verstellung zwischen zwei unabhängigen Bauteilen erreicht. Um die Verformung des Verbindungsbereiches in gewünschter Weise in einer vorbestimmten Richtung zu erzielen, ist gemäß der Erfindung vorgesehen, dass auf der Außenseite der Umhüllung zumindest eine und vorzugsweise mehrere hervorstehende Rippen ausgebildet sind, die sich vorzugsweise im wesentlichen senkrecht zur Längsachse des Interdentalreinigers erstrecken. Die Rippen bilden Verstärkungselemente, wobei im Fußbereich der Rippen und/oder zwischen den Rippen Bereiche gegeben sind, die im Vergleich zu den Rippen eine geringere Biegesteifigkeit besitzen, so dass durch die aussteifenden Rippen sichergestellt werden kann, wie sich der Träger relativ zum Handgriffteil verformt.

Vorzugsweise sind mehrere Rippen insbesondere parallel nebeneinander angeordnet, so dass sich in den Bereichen zwischen benachbarten Rippen bevorzugte Biegeachsen oder Biegebereiche bei Aufbringung eines Biegemomentes zwischen dem Träger und dem Handgriffteil einstellen.

Zusätzlich zu den Rippen der Umhüllung ist erfindungsgemäß vorgesehen, dass der Steg zumindest eine und vorzugsweise mehrere hervorstehende Steg-Rippen aufweist, die dazu dienen, eine Verformung des Trägers relativ zum Handgriffteil um eine vorbestimmte, im wesentlichen senkrecht zur Längsachse des Interdentalreinigers verlaufende Achse sicherzustellen. Zu diesem Zweck erstreckt sich die Steg-Rippe vorzugsweise im wesentlichen senkrecht zur Längsachse des Interdentalreinigers und es sind vorzugsweise mehrere Steg-Rippen insbesondere parallel auf Abstand nebeneinander angeordnet. Auch hierbei kann vorgesehen sein, dass die Steg-Rippen nur auf einer Seite des Steges angeordnet sind, alternativ kann vorgesehen sein, dass auf entgegengesetzten Seiten des Steges jeweils zumindest eine Steg-Rippe und vorzugsweise jeweils zumindest mehrere Steg-Rippen vorgesehen sein.

Erfindungsgemäß besitzt der Steg die genannten Steg-Rippen und die Umhüllung die genannten äußeren Rippen. Vorzugsweise ist der Steg im wesentlichen plattenförmig ausgestaltet und erstreckt sich parallel oder sogar in einer Ebene mit den ebenfalls plattenförmig ausgestalteten Handgriffteil. In einer möglichen Ausgestaltung kann es vorgesehen sein, dass die Steg-Rippen auf zwei entgegengesetzten Seiten des Steges ausgebildet sind. Alternativ dazu ist es möglich, dass die Steg-Rippen nur auf einer Seite des Steges ausgebildet sind. In diesem Fall kann die den Steg-Rippen abgewandte andere Seite des Steges eben und insbesondere unstrukturiert ausgebildet sein.

Die Größe und die Höhe der Steg-Rippen bestimmt die Biegefestigkeit des Verbindungsbereichs des Interdentalreinigers. In einer möglichen Ausgestaltung kann vorgesehen sein, dass die Steg-Rippen alle eine gleichartige Querschnittsabmessung aufweisen. Alternativ kann vorgesehen sein, dass die Höhe und damit der Querschnitt zumindest einiger Steg-Rippen unterschiedlich ist.

Die Rippe oder die Rippen können auf nur einer Seite der Umhüllung ausgebildet sein, alternativ kann vorgesehen sein, dass auf entgegengesetzten Seiten der Umhüllung jeweils zumindest eine Rippe vorgesehen ist.

Der Steg, der den Träger und das Handgriffteil miteinander verbindet, erstreckt sich vorzugsweise in Richtung der Längsachse des Interdentalreinigers und kann einen über seine Länge konstanten Querschnitt aufweisen. In bevorzugter Ausgestaltung der Erfindung ist vorgesehen, dass der Steg ein sich in Richtung des Handgriffteils verbreitenden Querschnitt aufweist, wobei gleichzeitig die Dicke des Stegs über seine Länge konstant sein kann.

Um die Verformungseigenschaften des Interdentalreinigers im Bereich des Steges zu beeinflussen oder um dessen Steifigkeit zu verringern, kann in Weiterbildung der Erfindung vorgesehen sein, dass in dem Steg zumindest eine und vorzugsweise mehrere Durchbrechungen angeordnet sind. Die Durchbrechungen können in Richtung der Längsachse des Interdentalreinigers auf Abstand angeordnet sein und sich nach Art von Schlitzen quer zur Längsachse erstrecken. Vorzugsweise sind die Durchbrechungen mit dem weich-elastischen Kunststoff der Umhüllung gefüllt, so dass einerseits eine erhöhte Federwirkung gegeben ist und andererseits der weich-elastische Kunststoff formschlüssig mit dem Träger im Bereich des Steges verbunden ist.

Damit der Benutzer das Handgriffteil sicher erfassen kann und von diesem nicht abrutscht, kann das Handgriffteil mit einer Auflage auf einem weich-elastischen Kunststoff, insbesondere einem thermoplastischen Elastomer oder einem Silikon versehen sein. Vorzugsweise wird dazu das gleiche Material verwendet, das auch als weich-elastischer Kunststoff der Umhüllung verwendet wird. Dabei kann vorgesehen sein, dass die Auflage des Handgriffteils mit dem weich-elastischen Kunststoff der Umhüllung einstückig verbunden ist, wodurch die Herstellung vereinfacht und eine gegenseitige Abstützung und Halterung der Teile gegeben ist.

Der Träger ist insbesondere an seinem vorderen Ende mit dem Reinigungsteil versehen, das beispielsweise in bekannter Ausgestaltung als hülsenförmiger Überzug mit radial hervorstehenden Strukturelementen wie einstückig angeformten Fingern und/oder eingebetteten Borsten versehen ist. Das Reinigungsteil besteht ebenfalls aus einem weich-elastischen Kunststoff und insbesondere aus dem gleichen weich-elastischen Kunststoff, aus dem auch die Umhüllung besteht. Dabei kann vorgesehen sein, dass das Reinigungsteil mit dem weich-elastischen Kunststoff der Umhüllung einstückig verbunden ist. Die Verbindung zwischen dem Reinigungsbereich und der Umhüllung kann über einen Verbindungsabschnitt aus weich-elastischem Kunststoff gegeben sein, der sich vorzugsweise in Richtung der Längsachse des Interdentalreinigers erstreckt. Dabei kann vorgesehen sein, dass der Verbindungsabschnitt in einem Kanal und insbesondere einem Axialkanal des Trägers angeordnet und insbesondere vollständig in diesem aufgenommen ist. Vorzugsweise ist auf entgegengesetzten Seiten des Trägers jeweils ein Kanal ausgebildet.

In einer weiteren möglichen Ausgestaltung der Erfindung kann vorgesehen sein, dass das Reinigungsteil, der Verbindungsabschnitt, die Umhüllung des Stegs und die Beschichtung des Handgriffteils aus dem gleichen weich-elastischen Material bestehen und in einem einzigen Arbeitsschritt als einstückiges Bauteil hergestellt sind.

Als Material für den Träger und/oder das Handgriffteil findet vorzugsweise ein formstabiler Kunststoff, insbesondere Polyprophylen, Polyamid oder Polyethylen Verwendung. Das Material kann faserverstärkt sein, beispielsweise durch Glasfasern, Karbonfasern oder natürliche Fasern, insbesondere Pflanzenfasern.

Als weich-elastischer Kunststoff für das Reinigungsteil und/oder die Umhüllung und/oder die Auflage des Handgriffteils kann ein thermoplastisches Elastomer oder Silikon Verwendung finden.

Im folgenden werden einige Abmessungen des Steges und der Umhüllung im Verbindungsbereich erläutert.

In einer möglichen Ausführungsform besitzt der Steg auf seiner Unterseite eine glatte, konturlose Oberfläche und geht glatt und stufenlos in die benachbarten Abschnitte des Trägers und des Handgriffteils über. Auf seiner entgegengesetzten Oberseite besitzt der Steg mehrere und insbesondere zwei sich senkrecht zur Längsachse des Interdentalreinigers erstreckende, auf Abstand voneinander und parallel zueinander angeordnete Stegrippen. Die Stegrippen sind gebildet, indem auf der Oberseite des Steges sich senkrecht zur Längsachse des Interdentalreinigers erstreckende, auf Abstand voneinander und parallel zueinander angeordnete nutartige Vertiefungen ausgebildet sind. Zwischen zwei benachbarten nutartigen Vertiefungen ist jeweils eine Stegrippe gebildet.

Der Steg besitzt eine maximale Dicke a im Bereich von 0,5mm bis 1,0mm und insbesondere von 0,7mm. Die nutartigen Vertiefungen besitzen eine Tiefe b im Bereich von 0,1a bis 0,3a und insbesondere 0,2a. Dies entspricht auch der Höhe der Stegrippen.

Vorzugweise besitzen die nutartigen Vertiefungen einen Querschnitt in Form eines Kreissegments, wobei der Radius im Bereich von 0,8mm bis 1,6mm liegt und vorzugsweise 1,2mm beträgt.

Der Verbindungsbereich bzw. der Steg ist vorzugsweise vollständig von der Umhüllung aus dem weich-elastischen Kunststoff ummantelt, wobei die Umhüllung sowohl an das Handgriffteil als auch an den Träger angespritzt ist.

Vorzugsweise besitzt die Umhüllung auf der Oberseite des Steges eine annähernd konstante Wandstärke und folgt somit der Kontur des Steges. Auf diese Weise sind auf der Oberseite der Umhüllung ebenfalls mehrere und insbesondere zwei in Richtung der Längsachse L des Interdentalreinigers auf Abstand hintereinander liegende, parallel angeordnete, hervorstehende Rippen gebildet, die genau über den Stegrippen des Steges angeordnet sind. Die Wandstärke c bzw. Dicke der Umhüllung sollte im Bereich von 0,3mm bis 0,8mm liegen und insbesondere 0,5mm bis 0,6mm betragen.

Da die Formgebung auf der Außenseite der Umhüllung der Formgebung auf der Oberseite des Steges folgt, sind auch auf der Außenseite der Umhüllung mehrere senkrecht zur Längsachse des Interdentalreinigers verlaufende, auf Abstand angeordnete nutartige Vertiefungen vorgesehen, wobei zwischen zwei benachbarten nutartigen Vertiefungen jeweils eine Rippe gebildet ist. Auch die nutartigen Vertiefungen besitzen im Querschnitt die Form eines Kreissegmentes mit einem Radius im Bereich von 0,5mm bis 1,0mm und insbesondere von 0,7mm.

Auf der Unterseite des Steges ist vorzugsweise ebenfalls die Umhüllung vorgesehen, jedoch folgt die Umhüllung im erläuterten Ausführungsbeispiel in diesem Bereich nicht der Formgebung, d.h. der glatten Oberfläche des Steges, sondern die nutartigen Vertiefungen und die Rippen laufen vollständig um den Steg herum und sind somit auch auf der Unterseite des Steges auf der Außenseite der Umhüllung vorhanden.

Weitere Einzelheiten und Merkmale der Erfindung sind aus der folgenden Beschreibung von Ausführungsbeispielen unter Bezugnahme auf die Zeichnung ersichtlich. Es zeigen:
Fig. 1 Eine perspektivische Ansicht eines erfindungsgemäßen Interdentalreinigers,
Fig. 2 eine Aufsicht auf den Interdentalreiniger gemäß Figur 1,
Fig. 3 den Schnitt III-III in Figur 2
Fig. 4 dem stabförmigen Träger, den Steg und das Handgriffteil als einstückiges Bauteil in einer möglichen Ausführungsform in Aufsicht,
Fig. 5 eine Unteransicht des Bauteils gemäß Fig. 4,
Fig. 6 den stabförmigen Träger, den Steg und das Handgriffteil als einstückiges Bauteil in einer alternativen Ausführungsform,
Fig. 7 eine Unteransicht des Bauteils gemäß Fig. 6,
Fig. 8 einen Längsschnitt durch den Interdentalreiniger gemäß einer weiteren Ausführungsform,
Fig. 9 das Detail IX aus Figur 8,
Fig. 10 eine Figur 9 entsprechende Schnittdarstellung einer nicht erfindungsgemäßen alternativen Ausführungsform,
Fig. 11 eine Figur 9 entsprechende Schnittdarstellung einer weiteren alternativen Ausführungsform,
Fig. 12 eine Figur 9 entsprechende Schnittdarstellung einer weiteren alternativen Ausführungsform,
Fig. 13 eine Figur 9 entsprechende Schnittdarstellung einer nicht erfindungsgemäßen weiteren alternativen Ausführungsform,
Fig. 14 eine Figur 9 entsprechende Schnittdarstellung einer weiteren alternativen Ausführungsform,
Fig. 15 eine Figur 9 entsprechende Schnittdarstellung einer weiteren alternativen Ausführungsform,
Fig. 16 den stabförmigen Träger, den Steg und das Handgriffteil als einstückiges Bauteil in einer weiteren nicht erfindungsgemäßen Ausführungsform,
Fig. 17 einen auszugsweise Längsschnitt durch das Bauteil gemäß Fig. 11 mit aufgebrachter Umhüllung und
Fig. 18 eine vergrößerte Schnittdarstellung entsprechend Fig. 3

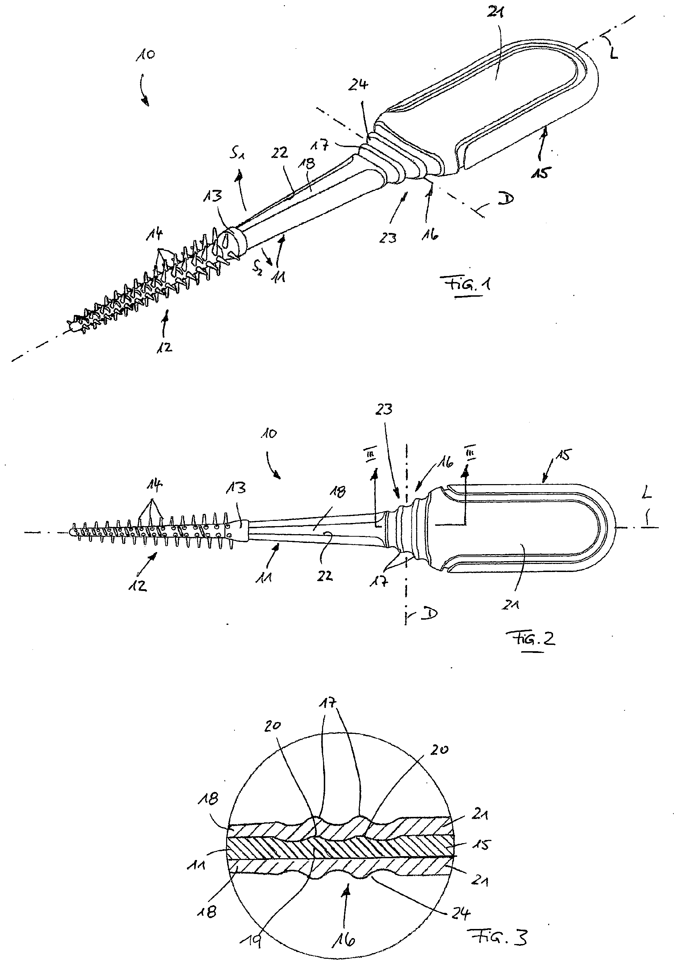

Die Figuren 1 und 2 zeigen einen erfindungsgemäßen Interdentalreiniger 10, der einen stabförmigen Träger 11 aus einem formstabilen Kunststoff aufweist, der sich zu seinem vorderen, gemäß den Figuren linken Ende hin konisch verjüngt. In seinem vorderen, den gemäß den Figuren linken Endbereich ist auf den Träger 11 ein Reinigungsteil 12 in Form eines hülsenförmigen Überzugs 13 aus einem weich-elastischen Kunststoff, beispielsweise einem thermoplastischen Elastomer oder Silikon aufgebracht und insbesondere aufgespritzt. Auf der Außenoberfläche des hülsenförmigen Überzugs 13 sind radial hervorstehende Strukturelemente in Form von angeformten Fingern 14 ausgebildet.

An dem hinteren, gemäß den Figuren 1 und 2 rechten Ende ist der stabförmige Träger 11 über einen Verbindungsbereich 16 mit einem im wesentlichen plattenförmigen Handgriffteil 15 verbunden. Das Handgriffteil 15 ist mit einer Auflage 21 aus einem weich-elastischen Kunststoff versehen, bei dem es sich um das gleiche Material wie bei dem hülsenförmigen Überzug 13 handeln kann.

Wie der Fig. 3 zu entnehmen ist, sind der Träger 11 und das Handgriffteil 15 über einen sich axial in Richtung der Längsachse L des Interdentalreinigers 10 erstreckenden Steg 19 einstückig miteinander verbunden sind.

Der Verbindungsbereich 16 bildet ein Gelenk 23, um das der Träger 11 zusammen mit dem Reinigungsteil 12 um eine senkrecht zur Längsachse L des Interdentalreinigers 10 verlaufende Achse D schwenken kann, wie es durch die Pfeile S₁ und S₂ in Figur 1 angedeutet ist. Die Schwenkung erfolgt somit senkrecht zur Zeichenebene gemäß Figur 2.

Wie Figur 3 zeigt, sind der Träger 11 und das Handgriffteil 15 über den Steg 19 einstückig miteinander verbunden. Der Steg 19 besitzt auf seiner Unterseite eine glatte, konturenlose Oberfläche und geht glatt und stufenlos in die benachbarten Abschnitte des Trägers 11 und des Handgriffteils 15 über. Auf seiner entgegengesetzten Oberseite besitzt der Steg 19 zwei sich senkrecht zur Längsachse des Interdentalreinigers 10 erstreckende, auf Abstand voneinander und parallel zueinander angeordnete, hervorstehende Stegrippen 20. Der Verbindungsbereich 16 bzw. der Steg 19 ist vollständig von einer Umhüllung 24 aus dem weich elastischen Kunststoff ummantelt, wobei die Umhüllung 24 sowohl an das Handgriffteil 15 als auch an den Träger 11 angespritzt ist.

Die Umhüllung 24 besitzt auf ihrer Außenseite zwei in Richtung der Längsachse L des Interdentalreinigers 10 auf Abstand hintereinander liegende, parallel angeordnete, hervorstehende Rippen 17, die beim dargestellten Ausführungsbeispiel vollständig um den Verbindungsbereich umlaufen und zumindest auf dessen Oberseite und dessen Unterseite ausgebildet sein sollten. Die Rippen 17 der Umhüllung 24 liegen genau über den Stegrippen 20 des Stegs 19. Die Rippen 17 bilden zusammen mit den Steg-Rippen 20 Verstärkungsbereiche, so dass die Achse D sich im Bereich zwischen den Rippen 17 bzw. zwischen den Stegrippen 20 einstellt.

Das Reinigungsteil 12, die Umhüllung 24 und die Auflage 21 des Handgriffteils 15 bestehen alle aus dem gleichen weich-elastischen Material und sind als einstückiges Bauteil hergestellt, indem das Reinigungsteil 12 sowohl auf seiner in den Figuren sichtbaren Oberseite als auch vorzugsweise auf der entgegengesetzten Unterseite jeweils über einen stabförmigen Verbindungsabschnitt 18 mit dem Verbindungsbereich 16 verbunden ist. Wie insbesondere Figur 1 zeigt, ist der Verbindungsabschnitt 18 in einem Axialkanal 22 des Trägers 11 angeordnet und schließt mit diesem oberflächlich bündig ab.

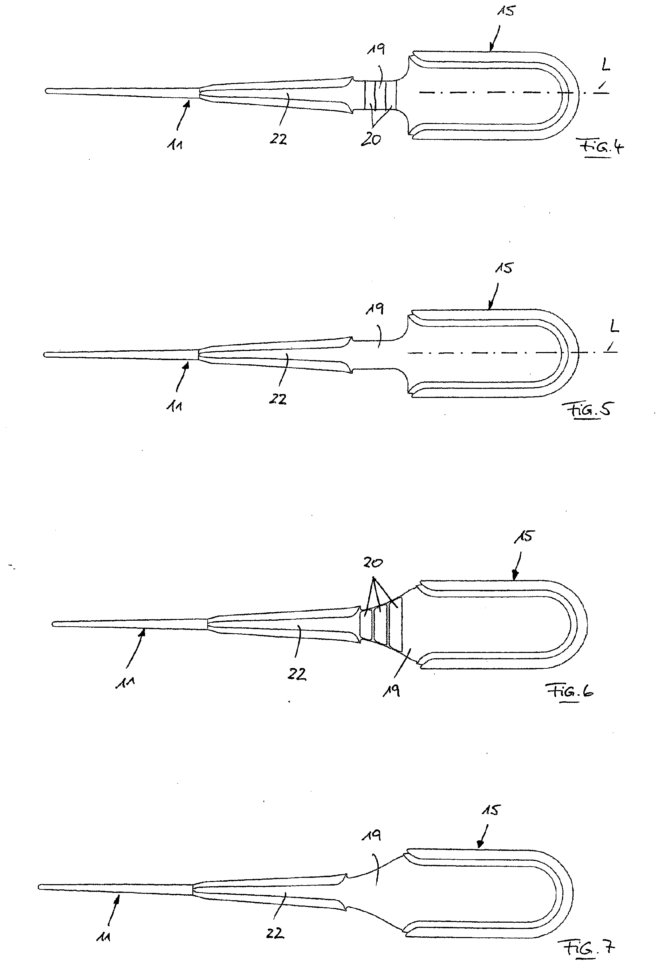

Der Verbindungsbereich 16 besitzt eine im wesentlichen kegelstumpfartige Form mit einem sich in Richtung der Längsachse L zum Handgriffteil 15 hin verbreiternden Querschnitt. Der Steg 19 folgt dieser Formgebung (s. Fig. 6 und 5), er kann aber auch über seine gesamte axiale Länge einen konstanten Querschnitt aufweisen (s. Fig. 4 und 5).

Die Figuren 4 und 5 zeigen nur das aus dem formstabilen Kunststoff bestehende Bauteil in einer 1. Ausführungsform, das den Träger 11, den Steg 19 und das Handgriffteil 15 umfasst und in einem nachfolgenden Verfahrensschritt mit dem weich-elastischen Kunststoff zur Bildung des hülsenförmigen Überzugs 13, des Verbindungsabschnitts 18, der Umhüllung 24 und der Auflage 21 mit weich-elastischem Kunststoff umspritzt wird. Dabei umgibt der weich-elastische Kunststoff in dem Verbindungsbereich 16 den Steg 19 vollständig und kapselt diesen ein. Die äußere Ausgestaltung des Verbindungsbereichs 16 entspricht derjenigen des Ausführungsbeispiels gemäß den Figuren 1 und 2.

Bei dem in den Figuren 4 und 5 dargestellten Ausführungsbeispiel besitzt der Steg 19 über seine axiale Länge einen konstanten Querschnitt. Auf seiner Oberseite (Figur 4) ist er mit den senkrecht zur Längsachse des L verlaufenden Steg-Rippen 20 ausgestaltet. Auf seiner entgegengesetzten Unterseite (Figur 5) sind keine Rippen vorgesehen, d.h. der Steg besitzt eine vorzugsweise ebene untere Oberfläche.

Wenn das in den Figuren 4 und 5 dargestellte Bauteil mit dem weich-elastischen Kunststoff umspritzt wird, kann die in dem Verbindungsbereich 16 ausgebildete Umhüllung 24 wahlweise entweder auf beiden Seiten die genannten Rippen aufweisen, es kann jedoch auch vorgesehen sein, die Rippen nur auf einer Seite der Umhüllung und vorzugsweise auf der gleichen Seite, auf der auch die Rippen des Steges ausgebildet sind, vorzusehen oder sogar an der Umhüllung auf Rippen vollständig zu verzichten, so dass die Umhüllung dann eine außenseitige glatte Oberfläche besitzt.

Die Figuren 6 und 7 zeigen ein gleichartiges Bauteil wie die Figur 4 und 5 und unterscheiden sich von diesen lediglich dadurch, dass der Steg 19 einen sich in Richtung der Längsachse L des Interdentalreinigers 10 zum Handgriffteil 15 hin erweiternden Querschnitt besitzt.

Auch das in den Figuren 6 und 7 dargestellte Bauteil wird in einem nachfolgenden Verfahrensschritt in genannter Weise mit dem weich-elastischen Kunststoff umgeben, wobei die oben stehenden Ausführungen zu der Anordnung der Rippen auch hier entsprechend gelten.

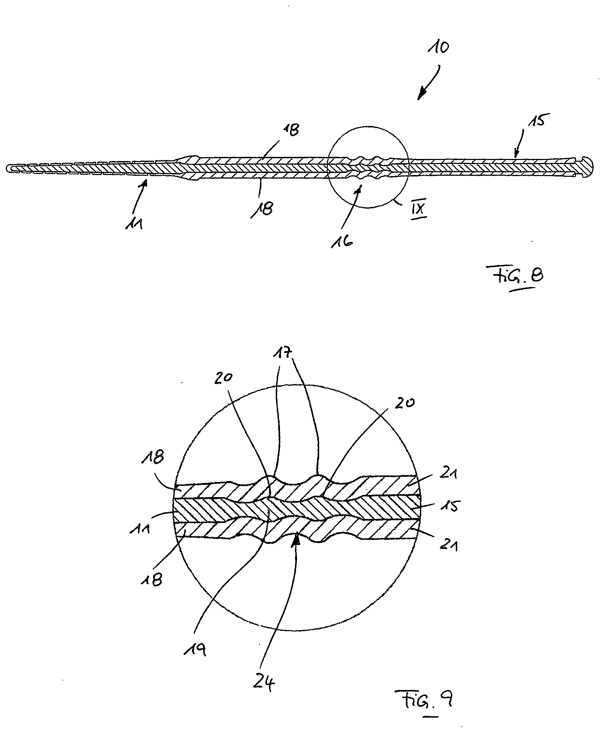

Figur 8 zeigt einen Längsschnitt durch einen Interdentalreiniger 10, bei dem der Verbindungsbereich 16 in alternativer Weise ausgestaltet ist. Der Verbindungsbereich 16 ist in Figur 9 in vergrößerter Darstellung gezeigt.

Wie Figur 9 zu entnehmen ist, besitzt der Steg 19 sowohl auf seiner Oberseite als auch seiner Unterseite jeweils zwei sich senkrecht zur Längsachse L des Interdentalreinigers 10 erstreckende, hervorstehende Steg-Rippen 20. Die Umhüllung 24, die aus dem weich-elastischen Kunststoff besteht, besitzt im dargestellten Ausführungsbeispiel eine konstante Dicke, so dass auch auf der Außenoberfläche der Umhüllung 24 die umlaufenden Rippen 17 gebildet sind. Diese Ausgestaltung weist somit den Steg 19 mit beidseitigen Steg-Rippen 17 und die Umhüllung 24 mit beidseitigen Rippen 17 auf.

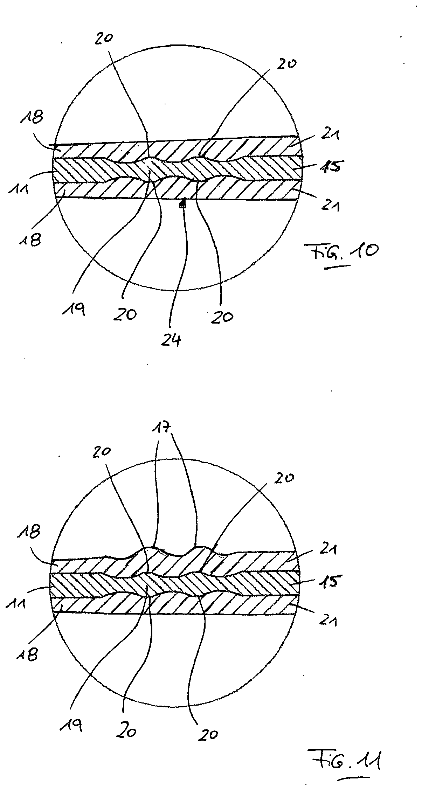

Figur 10 zeigt eine nicht erfindungsgemäße alternative Ausgestaltung zu Figur 9 und unterscheidet sich von dieser dadurch, dass die Umhüllung 24 keine äußeren Rippen, sondern auf beiden Seiten eine glatte Außenoberfläche besitzt, während der Steg 19 auf beiden Seiten mit Steg-Rippen 20 versehen ist.

Figur 11 zeig eine Alternative zu der Ausgestaltung gemäß Figur 10, wobei auch hier der Steg 19 auf beiden Seiten mit Steg-Rippen 20 versehen ist, die Umhüllung 24 jedoch nur auf einer Seite Rippen 17 aufweist und auf der entgegengesetzten Seite eine glatte Oberfläche besitzt.

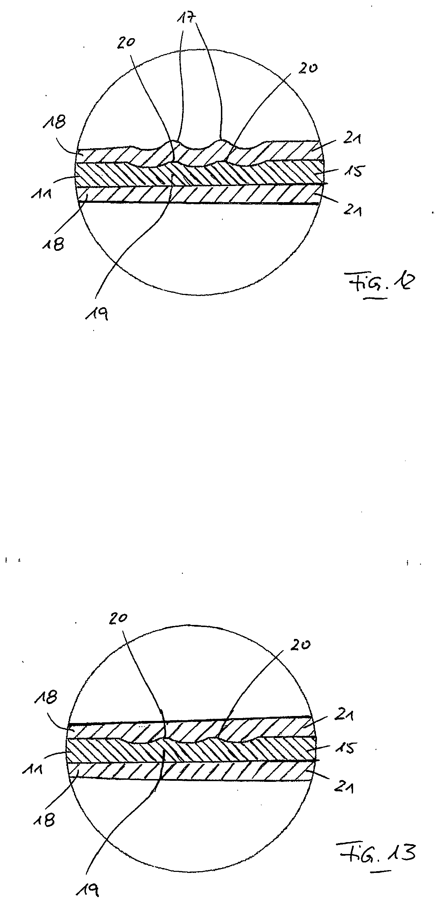

Eine weitere alternative Ausgestaltung ist in Figur 12 dargestellt. Dabei besitzt der Steg 19 auf seiner Oberseite zwei Steg-Rippen 20, während er auf seiner Unterseite eine glatte, vorzugsweise ebene Oberfläche besitzt. Die Umhüllung 24 folgt dieser Form, so dass auch die Umhüllung 24 auf ihrer Oberseite zwei Rippen 17 aufweist und auf ihrer Unterseite eine glatte, vorzugsweise ebene Oberfläche besitzt.

Bei der nicht erfindungsgemäßen Ausgestaltung gemäß Figur 13 besitzt der Steg 19 auf seiner Oberseite zwei Steg-Rippen 20 und auf seiner Unterseite eine glatte, vorzugsweise ebene Oberfläche. Die Umhüllung 24 besitzt sowohl auf ihrer Oberseite als auch ihrer Unterseite eine glatte, vorzugsweise ebene Oberfläche ohne Rippen.

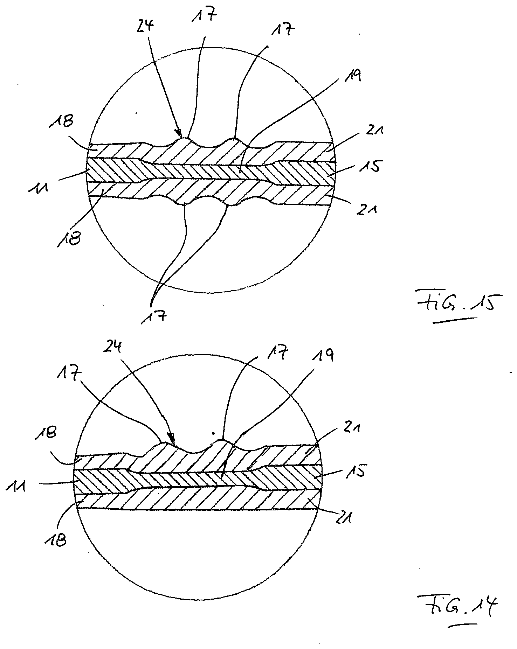

Figur 14 zeigt den Querschnitt in dem Verbindungsbereich 16 mit dem Steg 19 gemäß einer weiteren alternativen Ausgestaltung. Wie Figur 14 zu entnehmen ist, steht der Träger 11 über den Steg 19 mit dem Handgriffteil 15 in Verbindung, wobei der Steg 19 sowohl gegenüber dem Träger 11 als auch gegenüber dem Handgriffteil 15 eine verringerte Bauhöhe besitzt und keine Steg-Rippen, sondern eine glatte Oberfläche aufweist. Der weich-elastische Kunststoff bildet die Umhüllung 24 und geht auf der Unterseite des Steges 19 von dem Verbindungsabschnitt 18 glatt und stufenlos in die Oberfläche der Umhüllung 24 und von dieser glatt und stufenlos in die Auflage 21 des Handgriffteils 15 über. Auf der Oberseite des Steges 19 ist die Umhüllung 24 mit zwei sich senkrecht zur Längsachse L des Interdentalreinigers 10 erstreckenden, hervorstehenden Rippen 17 versehen. Diese Ausgestaltung weist somit den Steg 19 ohne Steg-Rippen und die Umhüllung 24 mit Rippen 17 auf nur einer Seite auf.

Figur 15 zeigt eine Abwandlung der Ausgestaltung gemäß Figur 14, die sich von dieser lediglich dadurch unterscheidet, dass auf der Außenoberfläche der Umhüllung 19 nunmehr auf beide Seiten zwei sich senkrecht zur Längsachse L des Interdentalreinigers 10 erstreckenden, hervorstehenden, umlaufenden Rippen 17 der genannten Art ausgebildet sind.

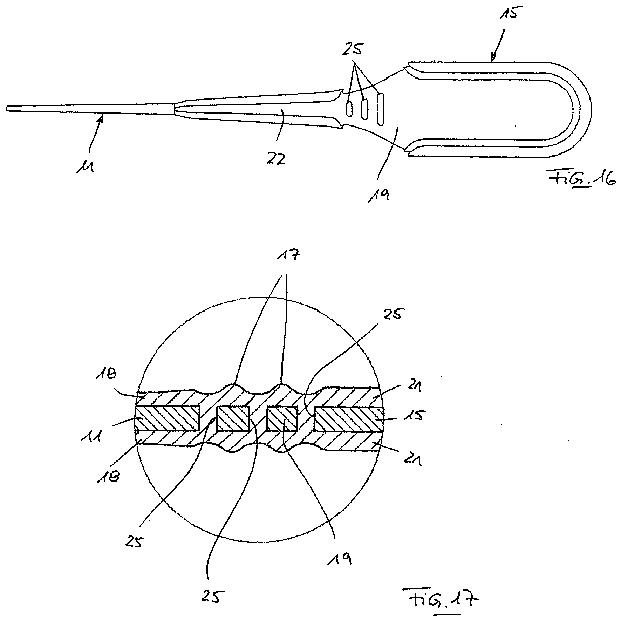

Die Figuren 16 und 17 zeigen ein weiteres nicht erfindungsgemäßes Ausführungsbeispiel. Das in Figur 16 gezeigte Bauteil, das den stabförmigen Träger 11, den Steg 19 und das Handgriffteil 15 umfasst, zeichnet sich dadurch aus, dass im Steg 19 mehrere in Längsrichtung des Interdentalreinigers auf Abstand angeordnete Durchbrechungen 25 vorgesehen sind, die als lineare Schlitze ausgebildet sind und sich quer zur Längsachse des Interdentalreinigers erstrecken. Der weich-elastische Kunststoff, der auf das in Figur 16 dargestellte Bauteil aufgetragen wird, durchgreift den Steg 19 an den Durchbrechungen 25, wie es in Figur 17 dargestellt ist. Dadurch ist der weich-elastische Kunststoff im Bereich des Steges 19 formschlüssig gehalten.

Bei dem dargestellten Ausführungsbeispiel sind auf der Außenseite des Verbindungsbereichs 18 in bereits erläuterter Weise Rippen ausgebildet, wobei die Durchbrechungen in Längsrichtung des Interdentalreinigers versetzt zu den Rippen angeordnet sind.

Die Durchbrechungen 25 im Steg 19 können bei allen Ausführungsformen, die vorstehend erläutert wurden, vorgesehen sein, d.h. sowohl bei Ausgestaltungen, bei denen der Steg beidseitig oder nur einseitig mit Steg-Rippen versehen ist oder gar keine Steg-Rippen aufweist sowie bei Ausgestaltungen, bei denen die Umhüllung beidseitig oder nur einseitig mit Rippen versehen ist oder gar keine Rippen aufweist.

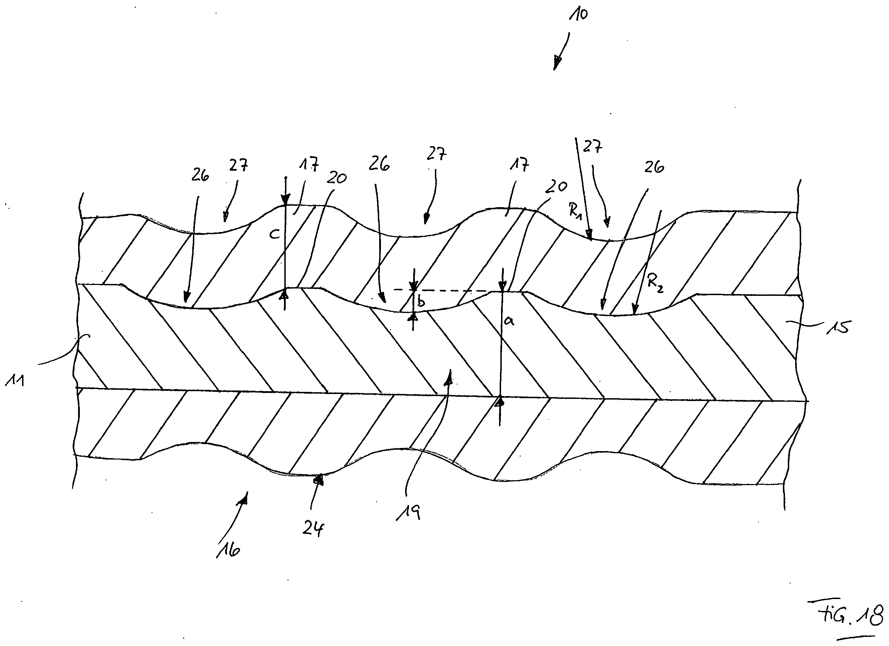

Figur 18 zeigt eine vergrößerte Schnittdarstellung entsprechend Figur 3, anhand der einige Abmessungen des Steges 19 und der Umhüllung 24 im Verbindungsbereich 16 erläutert werden.

Bei dem in Figur 18 dargestellten Ausführungsbeispiel besitzt der Steg 19 auf seiner Unterseite eine glatte, konturlose Oberfläche und geht glatt und stufenlos in die benachbarten Abschnitte des Trägers 11 und des Handgriffteils 15 über. Auf seiner entgegengesetzten Oberseite besitzt der Steg 19 zwei sich senkrecht zur Längsachse des Interdentalreinigers 10 erstreckende, auf Abstand voneinander und parallel zueinander angeordnete Stegrippen 20. Die Stegrippen 20 sind gebildet, indem auf der Oberseite des Steges 19 sich senkrecht zur Längsachse des Interdentalreinigers 10 erstreckende, auf Abstand voneinander und parallel zueinander angeordnete nutartige Vertiefungen 26 ausgebildet sind. Zwischen zwei benachbarten nutartigen Vertiefungen 26 ist jeweils eine Stegrippe 20 gebildet.

Der Steg 19 besitzt eine maximale Dicke a im Bereich von 0,5mm bis 1,0mm und insbesondere von 0,7mm. Die nutartigen Vertiefungen 26 besitzen eine Tiefe b im Bereich von 0,1a bis 0,3a und insbesondere 0,2a. Dies entspricht auch der Höhe der Stegrippen 20.

Wie Figur 18 zeigt, besitzen die nutartigen Vertiefungen 26 einen Querschnitt in Form eines Kreissegments, wobei der Radius R₂ im Bereich von 0,8mm bis 1,6mm liegt und vorzugsweise 1,2mm beträgt.

Der Verbindungsbereich 16 bzw. der Steg 19 ist vollständig von der Umhüllung 24 aus dem weich-elastischen Kunststoff ummantelt, wobei die Umhüllung 24 sowohl an das Handgriffteil 15 als auch an den Träger 11 angespritzt ist.

Wie Figur 18 zeigt, besitzt die Umhüllung 24 auf der Oberseite des Steges 19 eine annähernd konstante Wandstärke und folgt somit der Kontur des Steges 19. Auf diese Weise sind auf der Oberseite der Umhüllung ebenfalls zwei in Richtung der Längsachse L des Interdentalreinigers 10 auf Abstand hintereinander liegende, parallel angeordnete, hervorstehende Rippen 17 gebildet, die genau über den Stegrippen 20 des Steges 19 angeordnet sind. Die Wandstärke c bzw. Dicke der Umhüllung 24 sollte im Bereich von 0,3mm bis 0,8mm liegen und insbesondere 0,5mm bis 0,6mm betragen.

Da die Formgebung auf der Außenseite der Umhüllung 24 der Formgebung auf der Oberseite des Steges 19 folgt, sind auch auf der Außenseite der Umhüllung 19 mehrere senkrecht zur Längsachse des Interdentalreinigers 10 verlaufende, auf Abstand angeordnete nutartige Vertiefungen 27 vorgesehen, wobei zwischen zwei benachbarten nutartigen Vertiefungen 27 jeweils eine Rippe 17 gebildet ist. Auch die nutartigen Vertiefungen 27 besitzen im Querschnitt die Form eines Kreissegmentes mit einem Radius R₁ im Bereich von 0,5mm bis 1,0mm und insbesondere von 0,7mm.

Auf der Unterseite des Steges 19 ist ebenfalls die Umhüllung 24 vorgesehen, jedoch folgt die Umhüllung 24 in dem erläuterten Ausführungsbeispiel in diesem Bereich nicht der Formgebung, d.h. der glatten Oberfläche des Steges 19, sondern die nutartigen Vertiefungen 27 und die Rippen 17 laufen vollständig um den Steg 19 herum und sind somit auch auf der Unterseite des Steges 19 auf der Außenseite der Umhüllung 24 vorhanden.

Die genannten Abmessungen und Geometrien gelten auch in entsprechender Form für die weiteren Ausführungsbeispiele.

## Patentansprüche

1. Interdentalreiniger (10) mit einem stabförmigen Träger (11) aus Kunststoff, der in seinem einen Endbereich mit einem Reinigungsteil (12) aus einem weich-elastischen Kunststoff versehen ist, und mit einem Handgriffteil (15) aus Kunststoff, wobei der Träger (11) an seinem dem Handgriffteil (15) zugewandten Ende in einem Verbindungsbereich (16) mit dem Handgriffteil (15) über einen Steg (19) einstückig verbunden ist, wobei der Verbindungsbereich (16) als Gelenk (23) ausgebildet ist, wobei der Steg (19) zumindest teilweise mit einer Umhüllung (24) aus einem weich-elastischen Kunststoff versehen ist, wobei der Steg (19) zumindest eine hervorstehende Steg-Rippe (20) aufweist und auf der Außenseite der Umhüllung (24) zumindest eine Rippe (17) ausgebildet ist, **dadurch gekennzeichnet, dass** der Steg (19) eine maximale Dicke a im Bereich von 0,5mm bis 1,0mm und insbesondere von 0,7mm aufweist und die Umhüllung (24) eine Dicke c im Bereich von 0,3mm bis 0,8mm und insbesondere im Bereich von 0,5mm bis 0,6mm aufweist.

2. Interdentalreiniger nach Anspruch 1, **dadurch gekennzeichnet, dass** mehrere Steg-Rippen (20) auf Abstand nebeneinander angeordnet sind.

3. Interdentalreiniger nach Anspruch 1 oder 2, **dadurch gekennzeichnet, dass** auf entgegengesetzten Seiten des Steges (19) jeweils zumindest eine Steg-Rippe (20) vorgesehen ist.

4. Interdentalreiniger nach Anspruch 1 oder 2, **dadurch gekennzeichnet, dass** die Steg-Rippen (20) nur auf einer Seite des Steges (19) ausgebildet sind.

5. Interdentalreiniger nach einem der Ansprüche 1 bis 4, **dadurch gekennzeichnet, dass** sich die Rippe (17) im wesentlichen senkrecht zur Längsachse (L) des Interdentalreinigers (10) erstreckt.

6. Interdentalreiniger nach einem der Ansprüche 1 bis 5, **dadurch gekennzeichnet, dass** auf entgegengesetzten Seiten der Umhüllung (24) jeweils zumindest eine Rippe (17) vorgesehen ist.

7. Interdentalreiniger nach einem der Ansprüche 1 bis 6, **dadurch gekennzeichnet, dass** mehrere Rippen (17) auf Abstand nebeneinander angeordnet sind.

8. Interdentalreiniger nach einem der Ansprüche 1 bis 7, **dadurch gekennzeichnet, dass** der Steg (19) sich in Richtung der Längsachse (L) des Interdentalreinigers (10) erstreckt.

9. Interdentalreiniger nach einem der Ansprüche 1 bis 8, **dadurch gekennzeichnet, dass** in dem Steg (19) zumindest eine Durchbrechung (25) ausgebildet ist.

10. Interdentalreiniger nach einem der Ansprüche 1 bis 9, **dadurch gekennzeichnet, dass** das Reinigungsteil (13) mit dem weich-elastischen Kunststoff der Umhüllung (24) einstückig verbunden ist.

11. Interdentalreiniger nach Anspruch 10, **dadurch gekennzeichnet, dass** das Reinigungsteil (13) mit dem weich-elastischen Kunststoff der Umhüllung (24) über einen Verbindungsabschnitt (18) einstückig verbunden ist.

12. Interdentalreiniger nach Anspruch 11, **dadurch gekennzeichnet, dass** der Verbindungsabschnitt (18) in einem Kanal (22) des Trägers (11) angeordnet ist.

13. Interdentalreiniger nach Anspruch 12, **dadurch gekennzeichnet, dass** auf entgegengesetzten Seiten des Trägers (11) jeweils ein Kanal (22) ausgebildet ist.

14. Interdentalreiniger nach einem der Ansprüche 1 bis 13, **dadurch gekennzeichnet, dass** die Steg-Rippe (17) eine Höhe b im Bereich von 0,1a bis 0,3a und insbesondere von 0,2a aufweist.

15. Interdentalreiniger nach einem der Ansprüche 1 bis 14, dass in dem Steg (19) parallel zu der Stegrippe (20) zumindest einen nutartige Vertiefung (26) ausgebildet ist.

16. Interdentalreiniger nach Anspruch 15, **dadurch gekennzeichnet, dass** die nutartige Vertiefung (26) einen Querschnitt in Form eines Kreissegments mit einem Radius (R₂) im Bereich von 0,8mm bis 1,6mm und insbesondere von 1,2mm aufweist.

17. Interdentalreiniger nach einem der Ansprüche 1 bis 16, **dadurch gekennzeichnet, dass** in der Umhüllung (24) parallel zur Rippe (17) zumindest eine nutartige Vertiefung (27) ausgebildet ist.

18. Interdentalreiniger nach Anspruch 17, **dadurch gekennzeichnet, dass** die nutartige Vertiefung (27) einen Querschnitt in Form eines Kreissegments mit einem Radius (R₁) im Bereich von 0,5mm bis 1,0mm und insbesondere von 0,7mm aufweist.

## Claims

1. An interdental cleaner (10) with a rod-shaped support (11), which is made of plastic and, in one end region thereof, is provided with a cleaning part (12) made of a flexible plastic, and with a handle part (15) made of plastic, which support (11), at its end facing the handle part (15), is integrally connected to the handle part (15) in a connection region (16) via a web (19), wherein the connection region (16) is configured as a joint (23), wherein the web (19) is provided at least partially with a sheath (24) made of a flexible plastic, wherein the web (19) has at least one protruding web rib (20), and wherein at least one rib (17) is formed on the outer face of the sheath (24), **characterized in that** the web (19) has a maximum thickness a in the range of between 0.5 mm and 1.0 mm, in particular 0.7 mm and that the sheath (24) has a thickness c in the range of between 0.3 mm and 0.8 mm, in particular in the range of between 0.5 mm and 0.6 mm.

2. The interdental cleaner as claimed in claim 1, **characterized in that** several web ribs (20) are arranged alongside and at a distance from each other.

3. The interdental cleaner as claimed in claim 1 or 2, **characterized in that** at least one web rib (20) is provided respectively on opposite sides of the web (19).

4. The interdental cleaner as claimed in claim 1 or 2, **characterized in that** the web ribs (20) are formed only on one side of the web (19).

5. The interdental cleaner as claimed in one of claims 1 through 4, **characterized in that** the rib (17) extends substantially perpendicularly with respect to the longitudinal axis (L) of the interdental cleaner (10).

6. The interdental cleaner as claimed in one of claims 1 through 5, **characterized in that** at least one rib (17) is provided respectively on opposite sides of the sheath (24).

7. The interdental cleaner as claimed in one of claims 1 through 6, **characterized in that** several ribs (17) are arranged alongside and at a distance from each other.

8. The interdental cleaner as claimed in one of claims 1 through 7, **characterized in that** the web (19) extends in the direction of the longitudinal axis (L) of the interdental cleaner (10).

9. The interdental cleaner as claimed in one of claims 1 through 8, **characterized in that** at least one passage (25) is formed in the web (19).

10. The interdental cleaner as claimed in one of claims 1 through 9, **characterized in that** the cleaning part (12) is integrally connected to the flexible plastic of the sheath (24).

11. The interdental cleaner as claimed in claim 10, **characterized in that** the cleaning part (12) is integrally connected to the flexible plastic of the sheath (24) via a connection portion (18).

12. The interdental cleaner as claimed in claim 11, **characterized in that** the connection portion (18) is arranged in a channel (22) of the support (11).

13. The interdental cleaner as claimed in claim 12, **characterized in that** a channel (22) is formed respectively on opposite sides of the support (11) .

14. The interdental cleaner as claimed in one of claims 1 through 13, **characterized in that** the web rib (20) has a height b in the range of between O.la and 0.3a, in particular 0.2a.

15. The interdental cleaner as claimed in one of claims 1 through 14, **characterized in that** at least one groove-like depression (26) is formed in the web (19) parallel to the web rib (20).

16. The interdental cleaner as claimed in claim 15, **characterized in that** the groove-like depression (26) has a cross section in the shape of a segment of a circle with a radius (R₂) in the range of between 0.8 mm and 1.6 mm, in particular 1.2 mm.

17. The interdental cleaner as claimed in one of claims 1 through 16, **characterized in that** at least one groove-like depression (27) is formed in the sheath (24) parallel to the rib (17).

18. The interdental cleaner as claimed in claim 17, **characterized in that** the groove-like depression (27) has a cross section in the shape of a segment of a circle with a radius (R₁) in the range of between 0.5 mm and 1.0 mm, in particular 0.7 mm.

## Revendications

1. Dispositif de nettoyage de l'espace interdentaire (10) avec un support (11) en forme de tige en matière plastique qui est pourvu dans sa région d'extrémité d'une partie de nettoyage (12) en matière plastique élastique souple et avec une partie de manipulation (15) en matière plastique, le support (11) étant relié d'un seul tenant à la partie de manipulation (15) dans une zone de liaison (16), au niveau de son extrémité orientée vers la partie de manipulation (15), par l'intermédiaire d'un étai (19), la zone de liaison (16) étant réalisée sous la forme d'une articulation (23), l'étai (19) étant pourvu au moins en partie d'une enveloppe (24) en matière plastique élastique souple, l'étai (19) comportant au moins un renfort d'étai (20) et au moins un renfort (17) étant réalisé sur le côté extérieur de l'enveloppe (24), **caractérisé en ce que** l'étai (19) présente une épaisseur maximale a dans la plage de 0,5 mm à 1,0 mm et notamment de 0,7 mm et l'enveloppe (24) présentant une épaisseur c dans la plage de 0,3 mm à 0,8 mm et notamment dans la plage de 0,5 mm à 0,6 mm.

2. Dispositif de nettoyage de l'espace interdentaire selon la revendication 1, **caractérisé en ce que** plusieurs renforts d'étai (20) sont disposés côte à côte à une certaine distance les uns des autres.

3. Dispositif de nettoyage de l'espace interdentaire selon la revendication 1 ou 2, **caractérisé en ce que** respectivement au moins un renfort d'étai (20) est prévu sur les côtés opposés de l'étai (19).

4. Dispositif de nettoyage de l'espace interdentaire selon la revendication 1 ou 2, **caractérisé en ce que** les renforts d'étai (20) sont seulement réalisés sur un côté de l'étai (19).

5. Dispositif de nettoyage de l'espace interdentaire selon l'une quelconque des revendications 1 à 4, **caractérisé en ce que** le renfort (17) s'étend pour l'essentiel perpendiculairement à l'axe longitudinal (L) du dispositif de nettoyage de l'espace interdentaire (10).

6. Dispositif de nettoyage de l'espace interdentaire selon l'une quelconque des revendications 1 à 5, **caractérisé en ce que** respectivement au moins un renfort (17) est prévu sur les côtés opposés de l'enveloppe (24).

7. Dispositif de nettoyage de l'espace interdentaire selon l'une quelconque des revendications 1 à 6, **caractérisé en ce que** plusieurs renforts (17) sont disposés côte à côte à une certaine distance les uns des autres.

8. Dispositif de nettoyage de l'espace interdentaire selon l'une quelconque des revendications 1 à 7, **caractérisé en ce que** l'étai (19) s'étend en direction de l'axe longitudinal (L) du dispositif de nettoyage de l'espace interdentaire (10).

9. Dispositif de nettoyage de l'espace interdentaire selon l'une quelconque des revendications 1 à 8, **caractérisé en ce qu'**au moins un espace traversant (25) est réalisé dans l'étai (19).

10. Dispositif de nettoyage de l'espace interdentaire selon l'une quelconque des revendications 1 à 9, **caractérisé en ce que** la partie de nettoyage (13) est reliée d'un seul tenant à la matière plastique élastique souple de l'enveloppe (24).

11. Dispositif de nettoyage de l'espace interdentaire selon la revendication 10, **caractérisé en ce que** la partie de nettoyage (13) est reliée d'un seul tenant à la matière plastique élastique souple de l'enveloppe (24) par l'intermédiaire d'une section de liaison (18).

12. Dispositif de nettoyage de l'espace interdentaire selon la revendication 11, **caractérisé en ce que** la section de liaison (18) est disposée dans un canal (22) du support (11).

13. Dispositif de nettoyage de l'espace interdentaire selon la revendication 12, **caractérisé en ce que** respectivement un canal (22) est réalisé sur les côtés opposés du support (11).

14. Dispositif de nettoyage de l'espace interdentaire selon l'une quelconque des revendications 1 à 13, **caractérisé en ce que** le renfort d'étai (17) présente une hauteur b dans la plage de 0,1a à 0,3a et notamment de 0,2a.

15. Dispositif de nettoyage de l'espace interdentaire selon l'une quelconque des revendications 1 à 14, dans lequel au moins un renfoncement (26) de type rainure est réalisé dans l'étai (19), parallèlement au renfort d'étai (20).

16. Dispositif de nettoyage de l'espace interdentaire selon la revendication 15, **caractérisé en ce que** le renfoncement (26) de type rainure comporte une section transversale sous la forme d'un segment circulaire avec un rayon (R₂) dans la plage de 0,8 mm à 1,6 mm et notamment de 1,2 mm.

17. Dispositif de nettoyage de l'espace interdentaire selon l'une quelconque des revendications 1 à 16, **caractérisé en ce qu'**au moins un renfoncement (27) de type rainure est réalisé dans l'enveloppe (24) parallèlement au renfort (17).

18. Dispositif de nettoyage de l'espace interdentaire selon la revendication 17, **caractérisé en ce que** le renfoncement (27) de type rainure comporte une section transversale sous la forme d'un segment circulaire avec un rayon (R₁) dans la plage de 0,5 mm à 1,0 mm et notamment de 0,7 mm.
